# FASCICULE DE BREVET EUROPEEN

(11) **EP 1 109 446 B1**
(45) Date de publication et mention de la délivrance du brevet: **21.05.2003**
(21) Numéro de dépôt: 99940255.5
(22) Date de dépôt: 30.08.1999
(51) Int. Cl.: A01M 27/00

(54) **DISPOSITIF DE SECURITE POUR PIEGE A TAUPE A PETARD**
SICHERHEITSVORRICHTUNG FÜR PYROTECHNISCHE MAULWURFFALLE
SAFETY DEVICE FOR PYROTECHNIC MOLE TRAP

(30) Priorité: 31.08.1998 FR 9811043
(43) Date de publication de la demande: 27.06.2001
(73) Titulaire: Far Ouest, 22700 Perros Guirec (FR)
(72) Inventeur: MILON, Jean, F-22700 Perros-Guirec (FR)
(74) Mandataire: Somnier, Jean-Louis
(86) Numéro de dépôt international: FR9902067
(87) Numéro de publication internationale: WO00011945

(56) Documents cités:
- FR-A- 2 345 917
- FR-A- 2 403 023
- FR-A- 2 626 142
- FR-A- 2 719 192
- FR-A- 2 750 294
- FR-A- 2 754 675

## Description

La présente invention concerne un dispositif de sécurité pour un piège destiné en particulier à la destruction des taupes par la déflagration d'un petit pétard.

Le brevet français 2 750 294 décrit un tel piège non muni du dispositif de sécurité objet de l'invention. Un boîtier planté près de la cheminé d'une galerie de taupe contient essentiellement une source électrique telle qu'une pile et un contact électrique, un pétard constitué d'une charge pyrotechnique à allumage électrique est placé dans la galerie, un palpeur placé dans la cheminée de la galerie est relié mécaniquement au contact électrique et peut l'actionner. La taupe vient systématiquement reboucher la cheminée restée ouverte, pour cela elle repousse de la terre, ce qui soulève le palpeur et provoque la mise à feu du pétard. C'est l'onde de choc provoquée par la déflagration qui tue l'animal. Ce type de piège est très efficace et peu dangereux car le pétard, étant disposé sous terre, déflagre près de l'animal et ne nécessite pas une forte puissance. Toutefois, la manipulation du pétard lors de son branchement et lors de la pose ou de la dépose du piège peut présenter quelque danger. De plus, une mauvaise mise en place du piège peut le rendre peu efficace, si ce n'est même pas du tout efficace.

Des pièges pyrotechniques pour la description de taupes munis de dispositifs de sécurités sont connus de FR-A-2626142, FR-A-2403023 et FR-A-2345917.

Le dispositif selon l'invention permet de remédier à ces inconvénients en donnant la possibilité d'une part d'éviter tout allumage intempestif du pétard, et d'autre part de bien positionner l'ensemble des éléments constituant le piège pour que son efficacité soit optimale.

La charge pyrotechnique d'un tel piège est mise à feu par l'intermédiaire d'un filament métallique. fortement échauffé par le passage d'un courant électrique en provenance d'un générateur tel qu'une pile par exemple. Un contact électrique permet d'établir la continuité galvanique entre pile et filament d'allumage du pétard, ce qui provoque le courant de mise à feu. Ce contact électrique est actionné par l'animal lui-même, en général à l'aide d'un palpeur et éventuellement d'un levier intermédiaire. Le dispositif objet de l'invention consiste en un système qui permet de neutraliser la fermeture du circuit électrique et donc de s'opposer au passage du courant de mise à feu, quelles que soient les fausses manoeuvres possibles telles que par exemple en cas de déplacement involontaire du poussoir lors de la mise en place et que l'on ne peut pas vérifier puisque celui-ci est disposé sous la terre.

La solution développée dans d'autres dispositifs connus consiste à disposer un interrupteur ou autres moyens en série sur le circuit d'allumage, la position «circuit ouvert» interdisant tout allumage constitue certes une position de sécurité mais quand on bascule sa position en «circuit fermé» pour permettre théoriquement le fonctionnement normal du piège, et si le palpeur a été déplacé entre-temps involontairement et sans que l'opérateur s'en rende compte, ce qui peut être effectivement le cas, le piège se déclenchera intempestivement.

La solution proposée par la présente invention consiste à disposer d'une pièce mobile formant verrou dont l'une des positions s'oppose mécaniquement à la fermeture du contact de mise à feu : cette position de la pièce mobile est une véritable position de sécurité.

L'invention sera mieux comprise à la lecture de la description ci-dessous, associée aux dessins annexés, le tout étant donné à titre d'exemple.

La figure 1 représente un piège pyrotechnique selon l'art antérieur auquel est ajouté un exemple de réalisation du dispositif objet de l'invention.

La figure 2 représente en coupe un piège de ce type montrant le circuit électrique et un autre mode de réalisation de l'invention utilisant en plus un interrupteur. Dans cette figure la pièce formant verrou n'est pas représentée.

La figure 3 est un agrandissement partiel de la figure 1 montrant une forme de réalisation de l'invention assurant le blocage mécanique du levier de commande du contact de mise à feu.

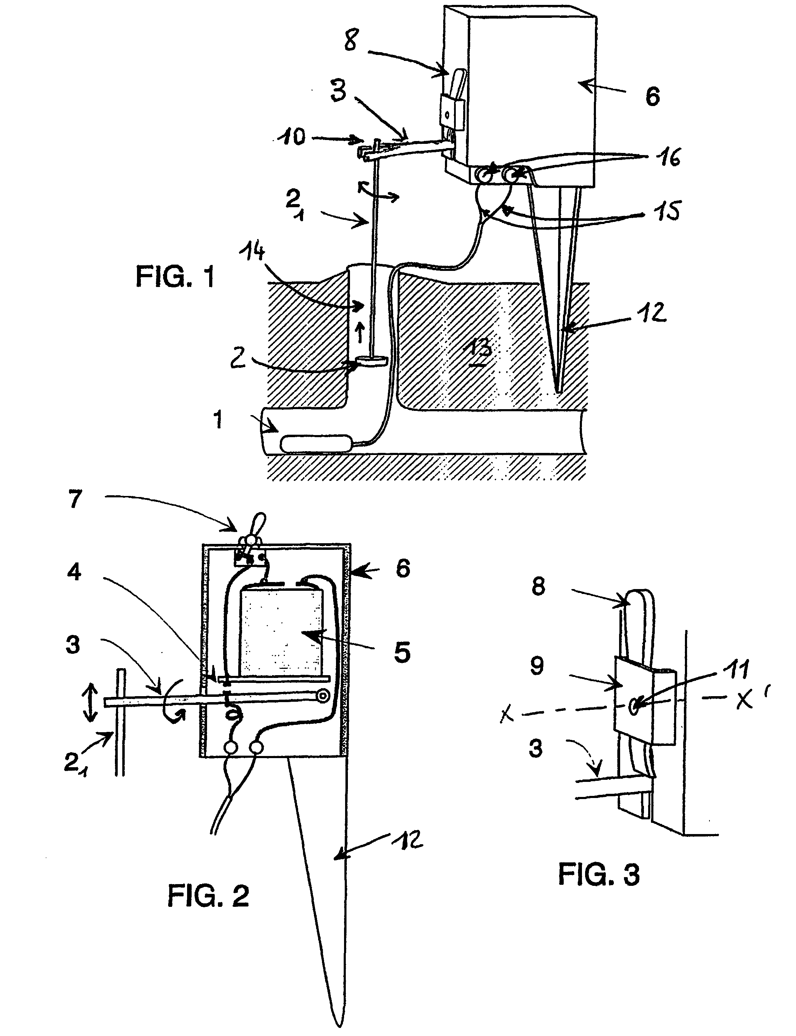

Le piège représenté par les figures 1 et 2 comporte : le pétard 1 contenant la charge pyrotechnique à mise à feu électrique, le palpeur 2 fixé à l'extrémité d'une tige 2₁ et que la taupe repoussera en rebouchant la cheminée 14 de sa galerie, le levier 3 entraîné par la tige 2₁ et qui est apte à établir le contact de mise à feu 4 et la pile 5. Le contact 4 et la pile sont protégés par le boîtier 6.

Une forme de réalisation de l'invention est représentée sur les figures 1 et 3. La pièce mobile 8 est articulée dans le support 9 autour d'un axe 11 suivant une direction XX' située dans un même plan que le levier 3 : cette pièce 8 forme un verrou ou cran de sécurité, qui dans la position représentée figure 3 constitue une entretoise entre l'axe 11 et le levier 3, et s'oppose donc au mouvement de celui-ci et par suite à l'établissement du contact de mise à feu. La figure 1 représente la pièce mobile 8 basculée sur le côté dans une position où le levier 3 est libéré et permet donc au piège de fonctionner normalement.

Dans un mode particulier de réalisation le piège selon l'invention peut comporter un interrupteur 7 et son câblage logé dans le boîtier 6 et tel que représenté sur la figure 2 : cet interrupteur branché en série sur le circuit de mise à feu incluant la source électrique 5, le contact de mise à feu 4 et le filament de pétard 1, permet dans sa position « circuit ouvert » de s'opposer au passage du courant même au cas où le contact de mise à feu est établi, ce qui constitue une sécurité supplémentaire durant les manipulations du piège. Cet interrupteur peut être remplacé également par de simples bornes extérieures au boîtier 6 sur lesquelles sont reliés les fils d'alimentation 15 du pétard 1 une fois celui-ci et l'ensemble du dispositif mis en place.

Ledit boîtier 6 comporte ou est de préférence en forme de poignée (non illustrée par les figures jointes) ; de plus il comporte une pointe 12 dans son prolongement, permettant de fixer le boîtier dans le sol 13 à proximité de la cheminée 14 de la galerie de la taupe que l'on veut détruire par simple enfichage soit verticalement, soit même incliné pour être au mieux parallèle à la direction de ladite cheminée de sortie de la taupinière. La forme de poignée du boîtier 6 permet de planter ainsi facilement le boîtier 6 qui est alors immobilisé et assure une meilleure sécurité de fonctionnement du dispositif de mise à feu : en effet, d'une part, la partie électrique est dégagée au-dessus de la surface du sol, ce qui l'isole mieux en cas de pluie, et d'autre part, la bonne immobilisation du boîtier par rapport au sol permet de supporter tout effort mécanique du dispositif de déclenchement mécanique de mise à feu et de transmettre son mouvement avec une bonne efficacité pour cette mise à feu.

Ce dispositif de déclenchement mécanique comprend en particulier une articulation 10 entre la tige 2₁ et le levier 3, celui-ci pouvant également tourner sur lui-même autour de son propre axe : ladite articulation 10 peut être réalisée par une fente partageant l'extrémité du levier 3 en deux parties entre lesquelles est glissée la tige 2₁ ; le double mouvement de rotation ainsi autorisé à la tige 2₁ autour de cette articulation 10, comme avec un cardan, permet un pivotement de ladite tige dans toutes les directions et donc de s'adapter, sans risque de blocage, à toute inclinaison de la cheminée 14 quelle que soit la position dans laquelle a été planté le boîtier 6.

De plus, la fente constituant ladite articulation 10 permet un réglage en hauteur de la tige 2₁ par simple glissement dans un logement, par ailleurs évasé de part et d'autre de la fente pour faciliter le pivotement de la tige 2₁ et assurant cependant un frottement suffisant pour l'immobiliser grâce à l'élasticité des deux parties de l'extrémité du levier 3 qui la prennent en sandwich. Cette disposition permet de régler en hauteur la position dudit palpeur 2 dans la cheminée 14 : en effet, son emplacement optimal doit être relativement près de la surface du terrain 13 tel que de un à trois centimètres : s'il est en effet trop profond la taupe risque de le pousser horizontalement au lieu de verticalement, ce qui le bloquera et ne déclencherait pas le pétard 1.

Le dispositif selon l'invention permet de modifier au minimum ladite cheminée 14 car si celle-ci est agrandie ou écrasée la taupe aura besoin de pousser plus de terre vers la surface et recevrait donc une explosion de moins grande intensité ; il faut cependant que cette cheminée soit bien ouverte sinon elle ne viendra pas la reboucher.

## Revendications

1. Piège pyrotechnique destiné par exemple à la destruction des taupes, utilisant un pétard pyrotechnique (1) à allumage électrique apte à être placé dans la galerie de l'animal, ledit piège étant constitué principalement d'un boîtier (6) apte à être placé extérieurement au sol, comprenant une source électrique (5), un contact (4) de mise à feu du pétard et un dispositif (3) de transmission du mouvement permettant l'établissement du contact de mise à feu par l'animal lui-même, ledit piège étant **caractérisé en ce qu'**il est muni d'un dispositif de sécurité constitué d'une pièce mobile (8) dont l'une des positions s'oppose mécaniquement à l'établissement du contact (4) de mise à feu, et capable d'interdire tout déclenchement intempestif du pétard (1) au cours des opérations de branchement dudit pétard ou de la pose ou dépose du piège.

2. Piège pyrotechnique selon la revendication 1, **caractérisé en ce que** le dispositif de sécurité comporte en outre un interrupteur (7) placé en série sur le circuit de mise à feu incluant la source électrique (5); le contact de mise à feu (4) et le filament du pétard (1).

3. Piège pyrotechnique selon l'une quelconque des revendications 1 ou 2, **caractérisé en ce que** le boîtier extérieur (6) comporte une poignée.

4. Piège pyrotechnique selon l'une quelconque des revendications 1 à 3, **caractérisé en ce que** le boîtier (6) comporte une pointe (12) apte à être enfichée dans le sol.

5. Piège pyrotechnique selon l'une quelconque des revendications 1 à 4, **caractérisé en ce que** le dispositif de transmission du mouvement permettant l'établissement du contact de mise à feu comporte une articulation (10) entre une tige (2₁) supportant un palpeur (2) apte à être repoussé par la taupe, et un levier (3) apte à établir le contact (4) de mise à feu.

6. Piège pyrotechnique selon la revendication 5, **caractérisé en ce que** l'articulation (10) est réalisée par une fente partageant l'extrémité du levier (3) et dans laquelle est glissée ladite tige (2₁).

7. Piège pyrotechnique selon l'une quelconque des revendications 5 ou 6, **caractérisé en ce que** le levier (3) est tournant sur son axe.

## Patentansprüche

1. Pyrotechnische Falle, die beispielsweise für die Tötung von Maulwürfen bestimmt ist, wobei ein pyrotechnischer Frosch mit elektrischer Zündung eingesetzt wird, der dazu in der Läge ist, in dem unterirdischen Gang des Tieres angeordnet zu werden, wobei die Falle hauptsächlich aus einem Gehäuse (6) besteht, das außerhalb auf dem Boden angeordnet werden kann, mit elner elektrischen Quelle (5), einem Kontakt (4) zum Anzünden des Frosches und einer Vorrichtung (3) zur Übertragung der Bewegung, welche das Herstellen des Zündkontaktes durch das Tier selbst ermöglicht, wobei die Falle **dadurch gekennzeichnet ist, dass** sie mit einer Sicherheitsvorrichtung versehen ist, welche aus einem beweglichen Teil (8) besteht, in dessen einer Position das Herstellen des Zündkontaktes (4) mechanisch verhindert ist, und welche dazu in der Lage ist, jedes unpassende Auslösen des Frosches (1) im Verlauf der Anschlussvorgänge des Frosches oder während der Anordnung oder Wegnahme der Falle zu verhindern.

2. Pyrotechnische Falle gemäß Anspruch 1, **dadurch gekennzeichnet, dass** die Sicherheitsvorrichtung außerdem einen Schalter (7) umfasst, der in Serie auf der Zündschaltung angeordnet ist, welche die elektrische Quelle (5), den Zündkontakt (4) und die Zündschnur des Frosches (1) umfasst.

3. Pyrotechnische Falle gemäß irgendeinem der Ansprüche 1 oder 2, **dadurch gekennzeichnet, dass** das äußere Gehäuse (6) eine Griff aufweist.

4. Pyrotechnlsche Falle gemäß irgendeinem der Ansprüche 1 bis 3, **dadurch gekennzeichnet, dass** das Gehäuse (6) eine Spitze (12) aufweist, welche in den Boden eingesteckt werden kann.

5. Pyrotechnische Falle gemäß irgendeinem der Ansprüche 1 bis 4, **dadurch gekennzeichnet, dass** die Vorrichtung zur Übertragung der Bewegung, welche das Herstellen des Zündkontaktes ermöglicht, eine Gelenkverbindung (10) aufweist zwischen einer Stange (2₁), welche einen Fühler (2) trägt, der von dem Maulwurf angestoßen werden kann, und einem Hebel (3), der in der Lage ist, den Zündkontakt (4) herzustellen.

6. Pyrotechnische Falle gemäß Anspruch 5, **dadurch gekennzeichnet, dass** die Gelenkverbindung (10) von einem Schlitz gebildet ist, welcher das Ende des Hebels (3) unterteilt, und in welchen die Stange (2₁) eingeschoben ist.

7. Pyrotechnische Falle gemäß irgendeinem der Ansprüche 5 oder 6, **dadurch gekennzeichnet, dass** der Hebel (3) um seine Achse drehbar ausgebildet ist

## Claims

1. Pyrotechnic trap intended for example for destroying moles, using an electrically ignited pyrotechnic firecracker (1) able to be placed in the tunnel of the animal, the said trap consisting principally of a casing (6) able to be placed externally to the ground, comprising an electrical source (5), a contact (4) for igniting the firecracker and a device (3) for transmitting the movement enabling the ignition contact to be established by the animal itself, the said trap being **characterised in that** it is provided with a safety device consisting of a movable piece (8), one of whose positions mechanically opposes the establishment of the ignition contact (4), and capable of preventing any unwanted triggering of the firecracker (1) during the operations of connecting the said firecracker or fitting or removing the trap.

2. Pyrotechnic trap according to Claim 1, **characterised in that** the security device also comprises a switch (7) placed in series with the ignition circuit including the electrical source (5), the ignition contact (4) and the filament of the firecracker (1).

3. Pyrotechnic trap according to either one of Claims 1 or 2, **characterised in that** the external casing (6) has a handle.

4. Pyrotechnic trap according to any one of Claims 1 to 3, **characterised in that** the casing (6) has a spike (12) able to be pushed into the ground.

5. Pyrotechnic trap according to any one of Claims 1 to 4, **characterised in that** the device for transmitting the movement allowing the establishment of the ignition contact comprises an articulation (10) between a rod (2₁) supporting a sensor (2) able to be pushed by the mole, and a lever (3) able to establish the ignition contact (4).

6. Pyrotechnic trap according to Claim 5, **characterised in that** the articulation (10) is produced by a slot dividing the end of the lever (3) and in which the said rod (2₁) is slipped.

7. Pyrotechnic trap according to either one of Claims 5 or 6, **characterised in that** the lever (3) is able to rotate on its axis.
